# EUROPEAN PATENT APPLICATION

(11) **EP 1 956 769 A2**
(43) Date of publication of application: **13.08.2008**
(21) Application number: 08002203.1
(22) Date of filing: 06.02.2008
(51) Int. Cl.: H04L 12/56, H04L 29/06

(54) **Method and related apparatus for enhancing resource utility rate in a wireless communications system**

(30) Priority: 12.02.2007 US 889301 P
(71) Applicant: Innovative Sonic Limited, Tortola (VG)
(72) Inventor: Jiang, Sam Shiaw-Shiang, Taipei City (TW); Guo, Yu-Hsuan, Taipei City (TW)
(74) Representative: Weber, Joachim

(57) **Abstract**

A method for enhancing resource utility rate in a medium access control layer of a wireless communications system includes generating at least one control element and receiving at least one data message (302), combining the at least one control element, the at least one data message, and a header to form a packet, the header including a plurality of fields indicating information of the at least one control element and the at least one data message (304), and transmitting the packet (306). The position of the at least one control element in the packet leads the position of the at least one data message in the packet (304).

## Description

This application claims the benefit of U.S. Provisional Application No. 60/889,301, filed on Feb 12, 2007 and entitled "Method and apparatus for optimizing MAC header and detecting protocol error in a Wireless Communications System", the contents of which are incorporated herein by reference.

The present invention relates to a method and apparatus for enhancing resource utility rate in a wireless communications system according to the pre-characterizing clauses of claims 1 and 5.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

According to the current system structure, the MAC layer of the LTE system supports not only transmission of data messages, but also transmission of control elements, so as to indicate buffer status, Discontinuous Reception (DRX) period control, scheduling information, etc. In other words, MAC PDUs (Protocol Data Units) may include data SDU(s) (Service Data Unit), control SDU(s) and padding. In such a situation, if the format of MAC PDU is not defined well, radio resources may be wasted.

For example, in order to enhance bandwidth utility rate and data processing efficiency, a MAC SDU (or RLC PDU) can eliminate padding, and becomes variable-size. In such a situation, to indicate the size of the MAC SDU, the corresponding MAC PDU includes a Length (L) field to indicate the length of the MAC SDU, which is an overhead for the MAC layer, decreases transmission efficiency, and causes waste of radio resources.

This in mind, the present invention aims at providing a method and apparatus for enhancing resource utility rate in a wireless communications system, for decreasing transmission overhead, so as to enhance resource utility rate.

This is achieved by a method and apparatus for enhancing resource utility rate in a wireless communications system according to claims 1 and 5. The dependent claims pertain to corresponding further developments and improvements.

As will be seen more clearly from the detailed description following below, the claimed method for enhancing resource utility rate in a medium access control layer of a wireless communications system comprises generating at least one control element and receiving at least one data message, combining the at least one control element, the at least one data message, and a header to form a packet, the header comprising a plurality of fields indicating information of the at least one control element and the at least one data message, and transmitting the packet. The position of the at least one control element in the packet leads the position of the at least one data message in the packet.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to an embodiment of the present invention.

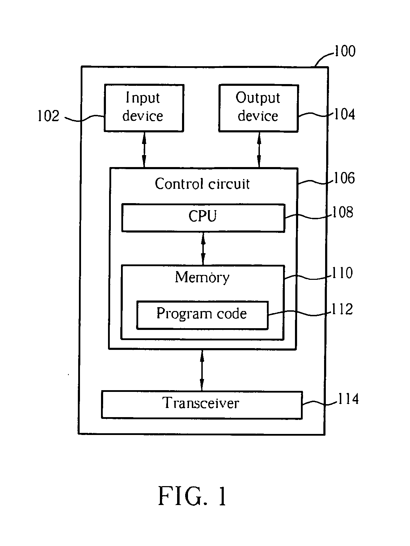

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

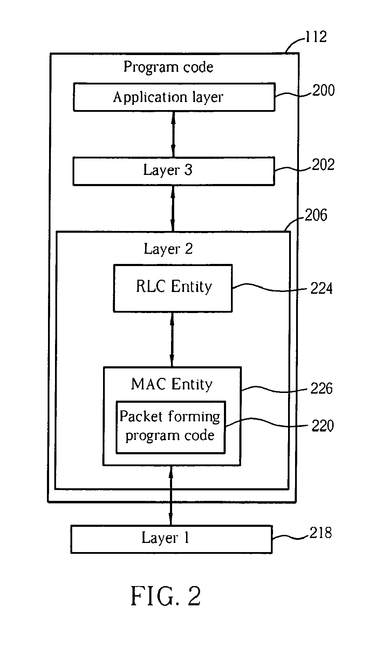

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, or random access control.

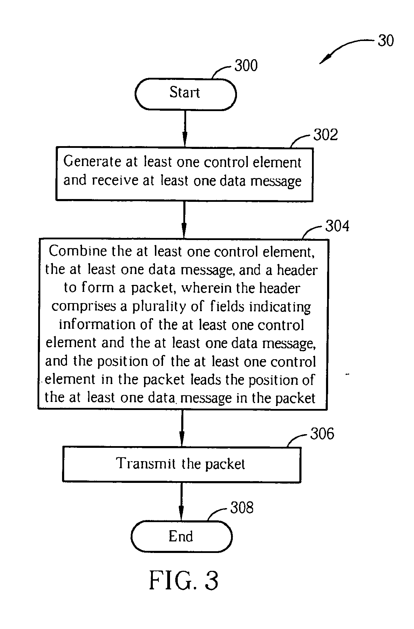

In the LTE system, the MAC entity 226 supports processes of control elements, so that a MAC PDU may include data SDU, control SDU, and padding. In such a situation, the embodiment of the present invention provides a packet forming program code 220 for decreasing transmission overhead, and enhancing resource utility rate. Please refer to Fig. 3, which illustrates a schematic diagram of a process 30. The process 30 is utilized for enhancing resource utility rate in a MAC layer of a wireless communications system, and can be compiled into the packet forming program code 220. The process 30 comprises the following steps:
Step 300: Start.
Step 302: Generate at least one control element and receive at least one data message.
Step 304: Combine the at least one control element, the at least one data message, and a header to form a packet, wherein the header comprises a plurality of fields indicating information of the at least one control element and the at least one data message, and the position of the at least one control element in the packet leads the position of the at least one data message in the packet.
Step 306: Transmit the packet.
Step 308: End.

According to the process 30, when forming a MAC PDU, the embodiment of the present invention sets the control elements in front of the data messages. As a result, the header does not need to comprise a field indicating the length of the last data message, so as to decrease transmission overhead, and enhance resource utility rate. Preferably, in the embodiment of the present invention the lengths of the control elements are default values, so that the header does not need to comprise fields indicating the lengths of the control elements.

Therefore, via the process 30, when a MAC PDU comprises control elements and data messages, the embodiment of the present invention sets the control elements in front of the data messages. As a result, the header does not need to comprise a field indicating the length of the last data message, so as to decrease transmission overhead, and enhance resource utility rate.

## Claims

1. A method for enhancing resource utility rate in a medium access control layer of a wireless communications system comprising:
generating at least one control element and receiving at least one data message (302);
combining the at least one control element, the at least one data message, and a header to form a packet, the header comprising a plurality of fields indicating information of the at least one control element and the at least one data message (304); and
transmitting the packet (306);
**characterized by** the position of the at least one control element in the packet leading the position of the at least one data message in the packet (304).

2. The method of claim 1, **characterized in that** the length of the at least one control element is a default value.

3. The method of claim 2, **characterized in that** the header does not comprise fields indicating the length of the at least one control element.

4. The method of claim 1, **characterized in that** the header does not comprise a field indicating the length of a last data message of the at least one data message.

5. A communications device (100) for enhancing resource utility rate in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
generating at least one control element and receiving at least one data message via a medium access control layer of the communications device (302);
combining the at least one control element, the at least one data message, and a header to form a packet, the header comprising a plurality of fields indicating information of the at least one control element and the at least one data message (304); and
transmitting the packet (306);
**characterized by** the position of the at least one control element in the packet leading the position of the at least one data message in the packet (304).

6. The communications device of claim 5, **characterized in that** the length of the at least one control element is a default value.

7. The communications device of claim 6, **characterized in that** the header does not comprise fields indicating the length of the at least one control element.

8. The communications device of claim 5, **characterized in that** the header does not comprise a field indicating the length of a last data message of the at least one data message.
